# EUROPEAN PATENT APPLICATION

(11) **EP 1 648 142 A1**
(43) Date of publication of application: **19.04.2006**
(21) Application number: 04292450.6
(22) Date of filing: 14.10.2004
(51) Int. Cl.: H04L 29/08

(54) **Server and method for controlling the operation of devices**

(71) Applicant: ALCATEL, 75008 Paris (FR)
(72) Inventor: Laible, Volker, Dipl.-Ing., 70469 (DE); Wahl, Stefan, Dipl.-Ing., 71701 Schwieberdingen (DE); Satzke, Klaus, Dr., 71732 Tamm (DE)
(74) Representative: LOUIS, PÖHLAU, LOHRENTZ

(57) **Abstract**

Subject invention concerns a server (4) and a method for controlling the operation of a number of devices (21-28). A group of two or more devices (21-28) allocated to a collocated device assistant (4). Status information (61-68) of two or more devices (21-28) of the group are transferred to the collocated device assistant (4). The collocated device assistant (4) dynamically controls one or more devices (21, 22, 24) of the group based on status information of at least one of the other devices (23) of the group.

## Description

The present invention relates to a method and a server for controlling the operation of a number of devices.

Nowadays users are confronted with multiple devices used for accessing IT and communication services. For example, a user is confronted with PSTN telephones, mobile phones, cordless phones, PCs and work stations as well as with more simple devices like TV screens, digital cameras, and so on. These devices are autonomous and able to function individually and independently of each other. For example, logging on or off to a phone and to a personal computer has to be done separately. The phone/telecommunication system (video communication, instant messaging...) as well as the IT infrastructure use different data bases controlled by different entities.

Further, some telephone terminals are equipped with an interface to connect the telephone with a personal computer. One can use a graphical user interface on the personal computer to access the phone. But, logging on or off to the computer by using a phone is not possible.

An object of the present invention is therefore to make the handling of devices such as IT and communication devices more easy.

The object of the present invention is achieved by a method of controlling the operation of a number of devices, wherein this method comprises the steps of: allocating a group of two or more devices to a collocated device assistant; transferring status information of two or more devices of the group to the collocated device assistant; and dynamically controlling by the collocated device assistant the one or more devices of the group based on status information of at least one of the other devices of the group. The object of the present invention is further achieved by a server for controlling the operation of a number of devices, wherein the server comprises a control unit for performing collocated device assistant functions for an allocated group of two or more devices and wherein the control unit receives status information of two or more devices of the group and dynamically controls the one or more devices of the group based on status information of at least one of the other devices of the group.

The collocated device assistant is aware of the states of the devices of the group. Preferably, it further has access to the different entities serving or hosting the devices. The collocated device assistant eases handling of the devices and improves the safety and security of the device infrastructure of one or more users. Further, the concept may be applied without the need to equip the various devices with compatible interfaces. Therefore no investment for new end devices has to be done.

Further advantages are achieved by the embodiments of the invention indicated by the dependent claims.

According to a preferred embodiment of the invention the collocated device assistant controls the logging on/off process of devices of the group based on status information of at least one of the other devices of the group. For example, the collocated device assistant monitors received status information to detect the logging on/off of devices of the group. As soon as it detects that a user logs on / logs off to a device, it automatically logs on / logs off collocated devices of the group. Thereby it simplifies the process of logging on/off to different devices: For example, if once you have logged on to your computer, i.e. if you have authenticated yourself, you are automatically logged on to the phone at your desk next to your computer. Vice versa, logging on to your phone can also automatically start the log-in process to your personal computers.

According to a further embodiment of the invention, the collocated device assistant dynamically updates the presence information in a presence data base based on status information of devices of the group. The presence data base is, for example, hold by a rich presence server accessed by the collocated device assistants by means of a sip-simple protocol. The collocated device assistant holds a rule base for each of the users and uses this rule base to determine respective user presence information based on the received status information of devices of the group in a dynamically manner. For example, the collocated device assistant uses the status information of the devices that are at the moment assigned to the user and a user specific rule base to determine the presence of the user and updates in the following the presence information of the devices assigned to the user in the rich presence server accordingly.

In case there are security issues, for example password policies that cannot easily be met by just using digits, passwords can be generated with the help of a hard key or a public key infrastructure. This makes the process of entering passwords by only using digits more secure.

Preferably, the collocated device assistant assigns a device of the group to a user based on status information of at least one of the other devices of the group. If a user logs on to a device or if the allocated device assistant detects activity of a specific user at one or more of the devices, it automatically assigns adjacent devices or a predefined or dynamically generated sub-group of devices to the identified user. Such process of dynamic assignment / reassignment of users to devices establishes the basis of various enhanced services capable of being implemented by means of the collocated device assistant. It improves the flexibility, user friendliness and customization of various groups of devices.

According to a first embodiment of the invention, the collocated device assistant determines the location of a user based on a status information received from devices of the group. The collocated device assistant scans the received status information for user specific activities and determines the position of the user or the relative position of the user as to other devices of the group. For example, the collocated device assistant uses information about the location of the users to select collocated devices and dynamically assign the user to these devices.

According to a further preferred embodiment of the invention, the collocated device assistant starts a shutdown device or locks / unlocks a device of the group based on status information of at least one of the other devices of the group. For example, locking your computer can also lock your phone and vice versa. For example, your phone does not automatically timeout when you are still working at your PC (supposing the company times out the phones after business hours to prevent unauthorized usage of the phones). Such applications improve the safety, security and also the user friendliness of the system.

Further improvements are achieved by the following:

The collocated device assistant initiates a rerouting of personal communication and/or IT functions of a user to one or more devices of the group based on status information of at least one of the other devices of the group. If a collocated device assistant is implemented for an entire office environment, one can instantly redirect phone calls and personal computer desktop environment from one workplace to another. If someone is longer than expected at someone else's office or in the lab and needs to make a phone call or access to his desktop environment, the collocated device assistant automatically detects the situation and performs the necessary rerouting of personal communication and/or IT functions. For example, if it detects rerouting of a call to another phone, it could also reroute the personal desktop environment to the personal computer right next to the phone that is currently used by the user.

According to a further embodiment, the collocated device assistant customizes a device of the group based on status information of at least one of the other devices of the group. For example, if the collocated device assistant assigns a device to a specific user based on the received status information of other devices, it initiates the customization of the respective device.

Further, the collocated device assistant can be used for presence aggregation. While you are, for example, on the phone, the screen saver of your PC, which normally would be activated since you are neither using your mouse nor your key pad, does not come up since the collocated device assistant is aware of usage and therefore knows that you are still at your desk. Further, it is possible that the service presence of users is aggregated in a presence data base. Looking up this data base it is possible for a calling device to determine each and all services that can be used to contact the called user. The collocated device assistant forwards status information of the devices to a presence server which aggregates the service presence information of each user. For example, if a telephone connection is established between a user and a third party and it is therefore at the moment not possible for the user to accept a video conference call with another party, the presence information of the video conference application has to be adapted.

Preferably, the collocated device assistant handles different types of IT and communication devices such as personal computers, PDAs, phones etc..

These as well as other features and advantages of the invention may be better appreciated by reading the following detailed description of presently preferred exemplary embodiments taken in conjunction with accompanying drawings, of which:

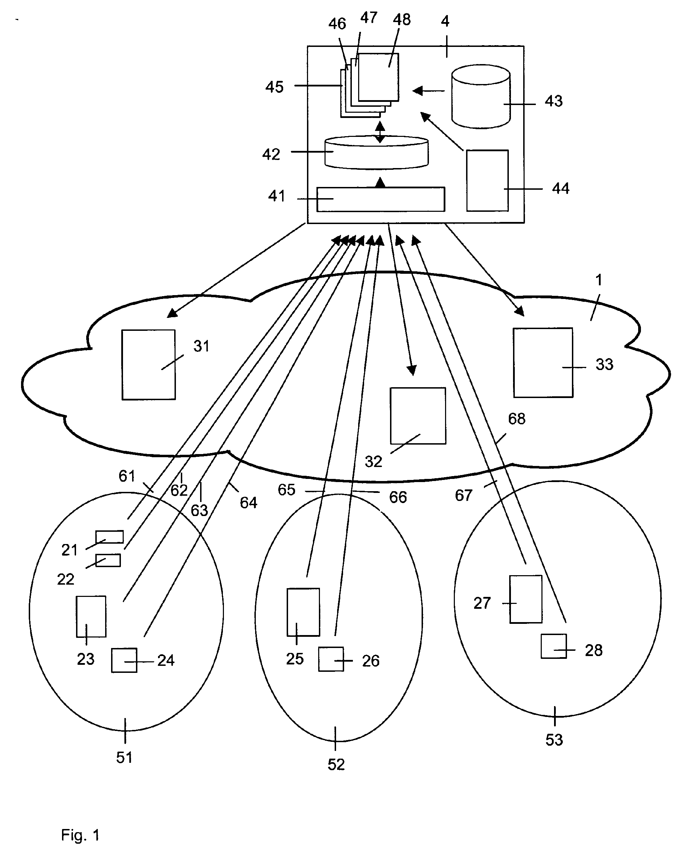

- Fig. 1: is a block diagram of an IT and communication system with a collocated device assistant according to the present invention.

Fig. 1 shows a communication network 1, a server 4 and a plurality of devices 21 to 28.

The devices 21 to 28 are devices providing IT and communication services, for example personal computers, PSTN-telephones, ISDN-telephones, PDAs (Personal Digital Assistant), cellular phones etc.. But, it is also possible that the devices 21 to 28 are any other kind of device capable of exchanging information via the communication network 1. For example, the devices 23, 25 and 27 are personal computers, the devices 24, 26 and 28 are telephones, the device 22 is a PDA and the device 21 is a mobile phone. Each of the devices 21 to 28 has an electronic circuit with one or more microprocessors and a set of application programs executed by these microprocessors. A CDA client resides on the system platform of the respective device (CDA = Collocated Device Assistant). The CDA client interacts with the server 4, monitors the status of the respective device or of one or more applications executed by the respective device and provides an interface for the server 4. The interface enables the server 4 to send control messages to the respective device or to one or more applications of the respective device. Further, it is possible that two or more CDA clients reside at the system platform of one device, where each of these CDA clients is allocated to a specific application of the device and performs application specific scanning and control functions.

Further it is possible that one or more of the devices 21 to 28 are not equipped with a CDA client. In such case, the network server associated with this device, for example a PABX (= Private Automatic Branch Exchange), is equipped with a CDA client performing the aforementioned functions.

The communication network 1 is a data network facilitating the transfer of data between the server 4, application servers 31 to 33 and the devices 21 to 28.

For example, the communication network 1 is an IP-network composed of various physical networks interlinked via a common level 3 IP protocol layer (IP = Internet Protocol). Various access technologies can be used to connect the application servers 31 to 33, the server 4, as well as the terminals 21 to 28 with the communication network 1. For example, the server 4 and the application servers 31 to 33 are connected via a LAN (LAN = Local Area Network), the devices 21 and 22 are connected via a data link of a cellular network (e.g. based on GPRS), the terminals 23 and 25 are connected via a wireless LAN and the terminals 24, 26, 27 and 28 via a digital subscriber line or a bearer channel of a PSTN or ISDN network with the communication network 1 (PSTN = Public Switch Telecommunication Network, ISDN = Integrated Service Digital Network, GPRS = General Packet Radio Service). Furthermore, the communication network 1 can be constituted of switched telephone networks, for example PSTN, ISDN or GSM networks, and/or an IP network. The application servers 31 to 33 are servers providing communication control or IT services for one or more of the devices 21 to 28.

For example, the application server 31 is an IT server providing services for a workgroup of personal computers, for example for the devices 23, 25 and 27. The application server 32 is a PABX or network element of a telephone network controlling and/or administrating the provision of communication services for one or more of the devices 21 to 28, for example for the devices 24, 26 and 28. The application server 33 is a network element of a cellular communication network controlling and/or administrating communication services for one or more of the devices 21 to 28, for example for the devices 21 and 22.

The server 4 performs collocated device assistant functions for an allocated group of two or more devices, for example for the devices 21 to 28. It receives status information of two or more of the devices of the group and dynamically controls one or more devices of the group based on status information of at least one of the other devices of the group.

The server 4 is constituted by one or several interlinked computers, a hardware platform and a plurality of application programs executed on the system platform formed by the aforementioned hard- and software components. The functionalities of the server 4 are provided by the execution of these software elements by the hardware components of the server 4. From functional point of view, the server 4 comprises control units 41, 44, 45, 46, 47 and 48 and two data bases 42 and 43.

The control unit 41 receives status information of a group of devices, for example of the devices 21 to 28. Therefore, it interacts with the CDA clients residing at the respective one of the devices 21 to 28 or residing at the application servers 31 to 33. Further, it stores the received status information at an appropriate place within the data structure of the data base 42.

The data base 42 holds status information of the devices of the group, as well as assignment information linking the respective device with a user and/or a specific location.

Status information are, for example, the operational state of the device, whether a user is logged on / logged off to the device, whether the device or an application of the device is logged on / logged off to a service provided by one of the application servers, state of applications executed by the device, monitored user activity, etc..

The control unit 41 dynamically updates the status information of the devices of the group stored in the data base 42. The data base 42 thereby mirrors the current state of the group.

The data base 43 holds environmental information and optionally user profile data sets of enrolled users of the collocated device assistant service. For example, the data base 43 stores information about the location of the devices 21 to 28. For example, the devices 21 to 24 are adjacent to one another at a first location 51, the devices 25 and 26 are adjacent to one another at a second location 52 and the devices 27 and 28 are adjacent to one another at a third location 53. The data base 43 holds the geographical position of the devices 21 to 28 or the geographical relationship between devices 21 to 28, i.e. assigns the devices 21 to 24 to a first location 51, the devices 25 and 26 to a second location 52 and the devices 27 and 28 to a third location 53.

User profile data are used to customize the collocated device assistant for the respective user. For example, it includes authorization codes for logging on/off the user to devices, applications executed by a device or services provided by an application server. Further, the user profile data adapt the collocated device assistant to the needs of the respective user. For example, the user profile data set specifies the type of collocated devices or the type of application of collocated devices that has to be included in an automatic logging on process of collocated devices.

The control unit 44 determines the geographical position of users of the collocated device assistant service. For example, each of the user has a unique RFID tag (RFID = Radio Frequency Identification) and the control unit 44 interacts with a plurality of RFID tag readers installed at various places to localize the actual position of the users. Further, it is possible that the control unit 44 interacts with a location base service that determines the actual position of a mobile device, for example a cellular phone, assigned to the respective user.

But, it is also possible to implement the collocated device assistant service without the control unit 44.

The control units 45 to 48 represent collocated device assistant processes assigned to different users, i.e. the control unit 45 represents the collocated device assistant process of a first user, the control unit 46 represents the collocated device assistant process of a second user, and so on.

In the following, the functionalities of the control units 45 to 48 are exemplified by hand of the functionality of the control unit 45.

The control unit 45 provides a collocated device assistant service for an allocated user. It scans the data base 42 for any user activity of this user. As soon as it detects that this user logs on to a device of the group, it checks by means of the data base 43 whether it shall automatically assign one or more other devices of the group to the user and shall start these devices, log on to these devices or register the user to these devices or to applications or application servers assigned to these devices. For example, as soon as the control unit 45 detects that the user logs on to the device 23, it automatically logs on the collocated devices 22, 24 and 21. The control unit 45 accesses the data base 43 and finds that the devices 21, 22 and 24 are arranged adjacent to the device 23 and are thereby collocated to the device 23. Then, it checks the user profile data set of the user to determine which type of collocated devices / applications of collocated devices has to be assigned to the user. Then, it checks the profile data set to determine, whether the assigned device has to be logged on, customized, etc.. For example, it customizes the user interface of these devices and contacts the application server 32 and 33 to reroute the personal communication functions of the user to the devices 22 and 24. At this step it contacts the application server 32 to assign the telephone set right next to the personal computer to the user, i.e. assign the telephone number of the user to this telephone set. In the following, the application server 32 reroutes telephone calls directed to this telephone number to this telephone set.

Furthermore, the control unit 45 automatically updates the presence information hold in a presence data base, for example a rich presence data base accessible via an SIP/SIMPLE protocol. The user profile data set of the user contains a set of rules used by the control unit 45 to conclude the presence information of the user as well as of the devices assigned to the user. It scans the state of the devices and dynamically changes the presence of the user at these devices based on the users rule base. For example, if it detects that the user uses his telephone set and is therefore not longer accessible via a video conference application, it accesses the presence data base and performs the correspondent amendments of the users' presence at the video conference service. Accordingly, a device in the meaning of present invention is not limited to a physical device but may represent a logical unit of the system, for example, an application executed at a computer, e.g. the aforementioned video conference application.

In the following, the control unit 45 scans the state of the devices assigned to the user as well as scans for any further user activity at one of the other devices of the group. As long as the control unit 45 detects user activity at one of the assigned devices, it assumes that the user is still working at that place and forces an appropriate activity of the devices. For example, the screen saver of a personal computer does not come up as long as the control unit 45 detects any user activity at one of the other devices, for example telephone conversation at the telephone set or any typing at the PDA next to the personal computer. Since the control unit 45 is aware of the telephone usage or the usage of the PDA it knows that the user is still at the desk and locks activation of the screen saver.

If the control unit 45 detects no more user activity at the devices 21 to 24, it locks the devices. Further, if the control unit 45 detects that the user locks one of the devices 21 to 24, it automatically locks the other ones of the devices 21 to 24. If the user unlocks one of the devices 21 to 24, the control unit 45 automatically unlocks the other ones of the devices 21 to 24.

If the control unit 45 detects that the user logs off at one of the devices 21 to 24 or shutdown one of the devices 21 to 24, it automatically logs off and/or shutdown the other ones of the devices 21 to 24.

Further, the control unit 45 scans for any user activity at a device currently not assigned to the user. If the control unit 45 detects, for example, user activity at the device 25 residing at a different location, it concludes that the user has moved to another location. Dependent on the user profile data set of the respective user, it locks the devices assigned to the user at the user's previous location or undo the assignment of these devices to the user. In the second case, it shutdowns or logs off at one or more of these devices and/or reroutes IT functions and/or communication functions to the new location. Further, it executes the aforementioned steps for the new location, i.e. looks for collocated devices and automatically logs the user on to such devices, customizes these devices and/or reroutes IT and/or communication functions to collocated devices.

Further, the control unit 45 could use the information about the location of the respective user determined by means of the control unit 44 to improve the aforementioned functionalities. For example, the devices 21 to 24 are automatically locked, if the control unit 44 detects through the control unit 44 that the user has left the location 51.

According to a further embodiment of the invention, the group of devices includes RFID tag readers automatically detecting user activity at one of the locations 51 to 53. As soon as the control unit 45 detects the movement of the user by means of these devices, it performs the aforementioned functionalities.

## Claims

1. A method of controlling the operation of a number of devices (21 to 28), the method comprising the steps of:
allocating a group of two or more devices (21 to 28) to a collocated device assistant (4);
transferring status information (61 to 68) of two or more devices (21 to 28) of the group to the collocated device assistant (4); and
dynamically controlling by the collocated device assistant (4) one or more devices of the group based on status information of at least one of the other devices of the group.

2. The method of claim 1,
**characterized in**
**that** the collocated device assistant (4) starts and/or shutdowns a device (21 to 28) of the group and/or locks a device (21 to 28) of the group based on status information (61 to 68) of at least one of the other devices (21 to 28) of the group.

3. The method of claim 1,
**characterized in**
**that** the collocated device assistant (4) automatically controls the logging on/off process of one or more devices of the group based on status information of the other devices of the group, in particular automatically logs on / logs off co-located devices of the group.

4. The method of claim 1,
**characterized in**
**that** the collocated device assistant (4) dynamically updates user presence information in a presence database based on status information (61 to 68) of devices (21 to 28) of the group.

5. The method of claim 1,
**characterized in**
**that** the collocated device assistant (4) customizes a device (21 to 28) of the group based on status information (61 to 68) of at least one of the other devices (21 to 28) of the group.

6. The method of claim 1,
**characterized in**
**that** the collocated device assistant (4) initiates a rerouting of personal communication and/or IT functions of a user to one or more devices (21 to 28) of the group based on status information (61 to 68) of at least one of the other devices (21 to 28) of the group.

7. The method of claim 1,
**characterized in**
**that** the collocated device assistant (4) assigns a device (21 to 28) of the group to a user based on status information (61 to 68) of at least one of the other devices (21 to 28) of the group.

8. The method of claim 1,
**characterized in**
**that** the collocated device assistant (4) determines the location of a user based on status information of devices of the group.

9. The method of claim 1,
**characterized in**
**that** the group contains different types of devices (21 to 28).

10. A server (4) for controlling the operation of a number of devices (21 to 28), the server (4) comprising a control unit (45 to 48) for performing collocated device assistant functions for an allocated group of two or more devices (21 to 28), wherein the control unit (45 to 48) is adapted to receive status information (60 to 68) of two or more devices (21 to 28) of the group and dynamically control the logging on/off process of one or more devices (21 to 28) of the group based on status information (61 to 68) of at least one of the other devices of the group.
